# EUROPÄISCHE PATENTSCHRIFT

(11) **EP 4 223 111 B1**
(45) Veröffentlichungstag und Bekanntmachung des Hinweises auf die Patenterteilung: **05.06.2024**
(21) Anmeldenummer: 23154198.8
(22) Anmeldetag: 31.01.2023
(51) Int. Cl.: A01K 1/015, A01K 5/02

(54) **EINSTREUVERTEILER-EINRICHTUNG ZUM AUTOMATISIERTEN EINSTREUEN VON STALLFLÄCHEN**
LITTER DISTRIBUTOR DEVICE FOR THE AUTOMATED SPREADING OF STABLE SURFACES
DISPOSITIF DISTRIBUTEUR DE LITIÈRE POUR L'ÉPANDAGE AUTOMATISÉ DE SURFACES D'ÉTABLES

(30) Priorität: 02.02.2022 AT 500532022
(43) Veröffentlichungstag der Anmeldung: 09.08.2023
(73) Patentinhaber: Schauer Agrotronic GmbH, 4731 Prambachkirchen (AT)
(72) Erfinder: LESSLHUMER, Erwin, 4731 Prambachkirchen (AT)
(74) Vertreter: Burger, Hannes

(56) Entgegenhaltungen:
- US-A1- 2013 186 988

## Beschreibung

Die Erfindung betrifft eine Einstreuverteiler-Einrichtung zum automatisierten Einstreuen von Stallflächen.

Die Dokumente US 2013/186988 A1, WO 2021/099799 A1, EP 3289860 A1, DE 202010016688 U1, DE 102013219081 A1 und DE 202007007033 U1 zeigen verschiedene Einstreuverteilersysteme zum Verteilen von Einstreu und/oder Futtermittel für Tiere in Stallflächen oder Feldern bekannt. Die aus diesen Dokumenten bekannten Vorrichtungen weisen den Nachteil auf, dass das Verteilen der Einstreu für eine bekannte Stallfläche bzw. eine bekannte Geometrie der Stallfläche nicht in einfacher Weise automatisiert erfolgen kann.

Aufgabe der vorliegenden Erfindung war es, die Nachteile des Standes der Technik zu überwinden und eine Vorrichtung zur Verfügung zu stellen, mittels derer das automatisierte Einstreuen von Stallflächen in einfacher Weise und durch eine verschmutzungstolerante Ausgestaltung der Einstreuverteiler-Einrichtung mit geringer Fehleranfälligkeit ermöglicht wird. Diese Aufgabe wird durch eine Vorrichtung und ein Verfahren gemäß den Ansprüchen gelöst. Erfindungsgemäß ist eine Einstreuverteiler-Einrichtung zum automatisierten Einstreuen von Stallflächen ausgebildet. Die Einstreuverteiler-Einrichtung umfasst ein Ringgehäuse mit einer Mittelachse. Weiters umfasst die Einstreuverteiler-Einrichtung eine Verteilvorrichtung zum Verteilen von Einstreu, wobei die Verteilvorrichtung abschnittsweise im Ringgehäuse angeordnet ist und relativ zum Ringgehäuse um die Mittelachse drehbar am Ringgehäuse gelagert ist, wobei die Verteilvorrichtung einen Drehkranz umfasst, wobei der Drehkranz an der Verteilvorrichtung an einer radial außenliegenden Umfangsfläche ausgebildet ist. Das Ringgehäuse umfasst weiters ein Ringbahnelement und einen Drehantrieb mit einem Gehäuse, wobei das Ringbahnelement an einer Außenumfangsfläche des Ringgehäuses um das Ringgehäuse umlaufend ausgebildet ist. Das Gehäuse des Drehantriebs ist mit dem Ringgehäuse gekoppelt bzw. ist das Gehäuse des Drehantriebs am Ringgehäuse gehaltert. Der Drehantrieb ist mit dem Drehkranz der Verteilvorrichtung gekoppelt, sodass die Verteilvorrichtung mittels des Drehantriebs um die Mittelachse relativ zum Ringgehäuse verdrehbar ist.

Die Verteilvorrichtung umfasst weiters einen Einstreu-Einwurfkanal, einen ersten Einstreu-Auswurfkanal und eine Führungsvorrichtung, wobei die Führungsvorrichtung an der Verteilvorrichtung mittels eines Führungslagers in Richtung parallel zur Mittelachse beweglich gelagert ist. Die Führungsvorrichtung ist mit dem ersten Einstreu-Auswurfkanal mittels eines Kippgelenks gekoppelt, wobei der erste Einstreu-Auswurfkanal bei einer Bewegung der Führungsvorrichtung in Richtung parallel zur Mittelachse um eine, normal zur Mittelachse ausgerichtete Schwenkachse schwenkbar ausgebildet ist.

Die Führungsvorrichtung ist mittels eines Führungselements entlang des Ringbahnelements führbar, wobei das Führungselement, bei einer Drehbewegung der Verteilvorrichtung relativ zum Ringgehäuse, entlang des Ringbahnelements bewegbar ist. Das Führungselement folgt somit einer Bahnkurve entlang des Ringbahnelements. Somit wird eine Bewegung des Führungselements in Richtung parallel zur Mittelachse mittels der Führungsvorrichtung und des Kippgelenks entsprechend der kinematischen Verhältnisse der Bauteile auf den Einstreu-Auswurfkanal übertragen. Dadurch wird ein Winkel bzw. ein Auswurfwinkel des ersten Einstreu-Auswurfkanals entsprechend der Bahnkurve verändert. Die Bahnkurve bzw. das Ringbahnelement kann derart ausgebildet sein, dass der Auswurfwinkel des ersten Einstreu-Auswurfkanals an die geometrische Ausgestaltungsform einer mit Einstreu zu bedeckenden Fläche, insbesondere einer Stallfläche einer Tierstallung angepasst ist, sodass die gesamte zu bedeckende Fläche mit Einstreu bedeckbar ist. Vorteilhaft ist dabei, dass das Ringbahnelement bei einer ortsfesten Installation der Einstreuverteiler-Einrichtung für eine Stallfläche einmalig auf die geometrische Ausgestaltungsform der Stallfläche eingestellt wird, wobei folglich ein wiederholt automatisiertes Einstreuen der Stallfläche mittels der Einstreuverteiler-Einrichtung ermöglicht wird. Gegenüber einem nicht vollständig automatisierten Einstreu-Vorgang ergeben sich durch die erfindungsgemäße Ausgestaltung Zeit- und Kosteneinsparungen.

Ferner kann vorgesehen sein, dass das Führungselement als eine Führungsrolle ausgebildet ist, wobei eine Lauffläche der Führungsrolle an einer Gegenlauffläche des Ringbahnelements anliegend ausgebildet ist, wenn die Mittelachse der Einstreuverteiler-Einrichtung im Wesentlichen vertikal bzw. entlang der Schwerkraft ausgerichtet ist. Da die Einstreu mittels eines Gebläses zur Einstreuverteiler-Einrichtung gefördert werden kann und somit Verschmutzungen der Einstreuverteiler-Einrichtung auftreten können, ist durch diese Ausgestaltung mit einer Führungsrolle die Einstreuverteiler-Einrichtung robust gegen Verschmutzungen. Damit ist der Reinigungsaufwand der Einstreuverteiler-Einrichtung beim automatisierte Einstreuen von Stallflächen verringert.

Darüber hinaus kann vorgesehen sein, dass das Ringbahnelement in Umfangsrichtung des Ringgehäuses derart ausgebildet ist, dass das Führungselement bei einer Bewegung entlang des Ringbahnelements einer geschlossenen Bahnkurve folgt, wobei die geschlossene Bahnkurve in Umfangsrichtung des Ringgehäuses einen Teilbereich der Bahnkurve mit einer positiven Steigung relativ zu einer Normalebene der Mittelachse aufweist. Durch die Bewegungsübertragung der Bahnkurve über die kinematischen Verhältnisse der Führungsvorrichtung auf den ersten Einstreu-Auswurfkanal wird somit die mit Einstreu bedeckbare Fläche vergrößert. Vorteilhaft ist auch eine Ausprägung, gemäß welcher vorgesehen sein kann, dass das Ringgehäuse eine Verstellvorrichtung umfasst, wobei das Ringbahnelement mittels der Verstellvorrichtung in Richtung parallel zur Mittelachse an der Außenumfangsfläche des Ringgehäuses positionierbar ist. Vorteilhaft ist dabei, dass die mit Einstreu zu bedeckende Fläche vergrößert ist. Gleichzeitig kann vermieden werden, dass im Nahbereich der Einstreuverteiler-Einrichtung zu wenig bzw. kein Einstreu in die zu bedeckende Fläche einbringbar ist.

Gemäß einer Weiterbildung ist es möglich, dass die Verstellvorrichtung zumindest drei Verstellelemente umfasst, wobei die Verstellelemente aus einer Gruppe, umfassend einen Hydraulikzylinder, einen Servoantrieb, einen Spindelantrieb, eine Schraubenklemme und einen Pneumatikzylinder ausgewählt sind. Vorteilhaft ist dabei, dass die Einstreuverteiler-Vorrichtung durch die Verstellbarkeit des Ringbahnelements in Richtung der Mittelachse an änderbare geometrische Ausgestaltungen der einzustreuenden Fläche adaptierbar ist.

Vorteilhaft kann auch sein, wenn das Ringbahnelement aus einem flexiblen Material wie beispielsweise Kunststoff, Gummi oder Kautschuk ausgebildet ist. Mittels aktiv verstellbarer Verstellelemente, wie beispielsweise einem Spindelantrieb kann somit die Bahnkurve des Ringbahnelements mittels einer Steuerungsvorrichtung verändert werden. Vorteilhaft ist dabei, dass Bereich der einzustreuenden Fläche gezielt angesteuert werden können, um diese wahlweise mit Einstreu zu bedecken oder nicht. Damit kann auf automatisiert auf veränderte Auslastungen von Stallungen reagiert werden.

Darüber hinaus kann vorgesehen sein, dass die Verteilvorrichtung einen zweiten Einstreu-Auswurfkanal und eine Stellklappe umfasst, wobei mittels der Stellklappe ein Einstreu-Materialstrom vom Einstreu-Einwurfkanal in einen ersten Auswurf-Materialstrom durch den ersten Einstreu-Auswurfkanal und in einen zweiten Auswurf-Materialstrom durch den zweiten Einstreu-Auswurfkanal teilbar ist. Vorteilhaft ist dabei, dass die einstreubare Fläche vergrößert ist. Insbesondere können damit Bereiche der einzustreuenden Fläche abgedeckt werden, die nicht im Wurfbereich des ersten Einstreu-Auswurfkanals liegen.

Des Weiteren kann vorgesehen sein, dass das Ringgehäuse eine Konsole umfasst, wobei die Einstreuverteiler-Einrichtung mittels der Konsole mit einer Einstreu-Bereitstellungseinrichtung, insbesondere mit einem Einstreu-Gebläse, koppelbar ist, wobei die Verteilvorrichtung gegenüber der Einstreu-Bereitstellungseinrichtung um die Mittelachse drehbar gelagert ist. Vorteilhaft ist dabei, dass die Einstreuverteiler-Einrichtung von der Positionierung einer Einstreu-Lagerstätte und von der Positionierung der Einstreu-Bereitstellungseinrichtung unabhängig positionierbar ist. Gleichermaßen ist es denkbar, dass mehrere Einstreuverteiler-Einrichtungen von einer Einstreu-Bereitstellungseinrichtung versorgbar sind. Dadurch kann die Positionierung der Einstreuverteiler-Einrichtung derart gewählt werden, dass diese im Bezug auf die einzustreuende Fläche optimal positioniert ist. Gleichzeitig kann eine Stallfläche mittels mehreren Einstreuverteiler-Einrichtungen bestreut werden, wobei in jedem Fall eine automatisierte und vollständige Bestreuung der Fläche gewährleistet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine erste perspektivische Ansicht der Einstreuverteiler-Einrichtung;
- Fig. 2: eine zweite perspektivische Ansicht der Einstreuverteiler-Einrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

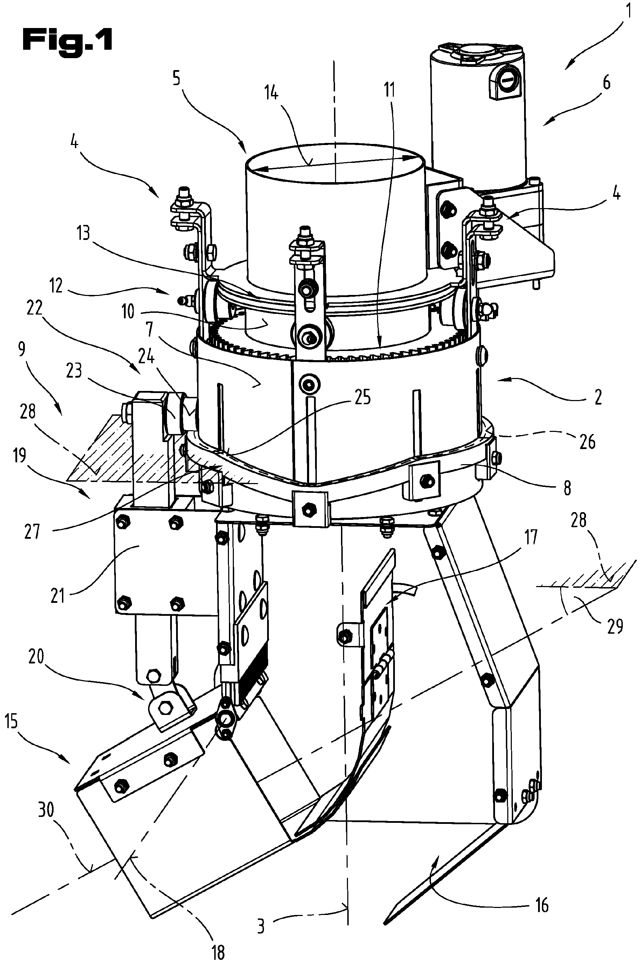

In der Fig. 1 eine erste perspektivische Ansicht der Einstreuverteiler-Einrichtung 1 gezeigt. Die Einstreuverteiler-Einrichtung 1 umfasst ein Ringgehäuse 2 mit einer Mittelachse 3. Das Ringgehäuse 2 kann eine Konsole 4 umfassen, mittels welcher Konsole 4 die Einstreuverteiler-Einrichtung 1. mit einer Einstreu-Bereitstellungseinrichtung 5 koppelbar ist. Mittels der Einstreu-Bereitstellungseinrichtung 5 kann die Einstreuverteiler-Einrichtung 1 beispielsweise mit einem Gebläse zur Versorgung mit Einstreu gekoppelt sein. Die Einstreu-Bereitstellungseinrichtung 5 kann mittels der Konsole 4 am Ringgehäuse 2 gehalten sein.

Weiters kann das Ringgehäuse 2 einen Drehantrieb 6 aufweisen, wobei der Drehantrieb 6 lagefest am Ringgehäuse 2 gehalten sein kann. An einer Außenumfangsfläche 7 des Ringgehäuses 2 kann ein Ringbahnelement 8 ausgebildet sein. Das Ringbahnelement 8 ist um das Ringgehäuse 2 umlaufend ausgebildet
Die Einstreuverteiler-Einrichtung 1 umfasst weiters eine Verteilvorrichtung 9 zum Verteilen des Einstreu, wobei die Verteilvorrichtung 9 abschnittsweise im Ringgehäuse 2 angeordnet ist und am Ringgehäuse 2 derart gelagert ist, dass die Verteilvorrichtung 9 relativ zum Ringgehäuse 2 um die Mittelachse 3 drehbar ist. An einer Umfangsfläche 10 der Verteilvorrichtung 9 kann ein, um die Verteilvorrichtung 9 umlaufender Drehkranz 11 ausgebildet sein. Der Drehkranz 11 kann mit dem Drehantrieb 6 derart gekoppelt sein, dass die Verteilvorrichtung 9 mittels dem Drehantrieb 6 über den Drehkranz 11 relativ zum Ringgehäuse 2 gedreht werden kann. Die Kopplung zwischen Drehantrieb 6 und Drehkranz 11 kann mittels einem, an einer Welle des Drehantriebs 6 gekoppelten Zahnrads bzw. eines Getriebes oder insbesondere eines Winkelgetriebes ausgebildet sein.

Die Verteilvorrichtung 9 kann einen Einstreu-Einwurfkanal 12 umfassen, wobei der Einstreu-Einwurfkanal 12 gegenüber der Einstreu-Bereitstellungseinrichtung 5 derart angeordnet sein kann, dass die Verteilvorrichtung 9 relativ zur Einstreu-Bereitstellungseinrichtung 5 um die Mittelachse 3 drehbar ist. Dazu kann in einem Übergangsbereich 13 zwischen der Einstreu-Bereitstellungseinrichtung 5 und dem Einstreu-Einwurfkanal 12 ein Luftspalt vorgesehen sein. Auch ist es denkbar, dass ein Kanalinnendurchmesser 14 der Einstreu-Bereitstellungseinrichtung 5 geringer ist als ein Innendurchmesser des Einstrau-Einwurfkanals 12, sodass der Materialstrom an Einstreu den Übergangsbereich 13 stetig durchfließen kann. Weiters ist es denkbar, dass der Einstreu-Einwurfkanal 12 und die Einstreu-Bereitstellungseinrichtung 5 im Übergangsbereich 13 jeweils radial außenliegend eine L-förmige Wandung aufweisen, mittels welcher der Luftspalt radial nach außen als Ringfläche ausgebildet ist und somit in weiterer Folge die Strömung durch den Luftspalt auf Grund von erhöhter Turbulenz im selbigen minimiert wird. Gleichzeitig bleibt die Verdrehbarkeit der Verteilvorrichtung 9 gegenüber der Einstreu-Bereitstellungseinrichtung 5 erhalten.

Weiters kann die Verteilvorrichtung 9 einen ersten Einstreu-Auswurfkanal 15 und einen zweiten Einstreu-Auswurfkanal 16 umfassen. Die Einstreu wird somit durch den Einstreu-Einwurfkanal 12 in die Verteilvorrichtung 9 eingebracht. Die Verteilvorrichtung 9 kann weiters eine Stellklappe 17 umfassen, die den Einstreu-Materialstrom in einen ersten Auswurf-Materialstrom durch den ersten Einstreu-Auswurfkanal 15 und in einen zweiten Auswurf-Materialstrom durch den zweiten Einstreu-Auswurfkanal 16 teilen kann.

Der erste Einstreu-Auswurfkanal 15 kann um eine Schwenkachse 18 schwenkbar ausgebildet sein, wobei die Schwenkachse 18 normal zur Mittelachse 3 ausgerichtet sein kann. Die Verteilvorrichtung 9 umfasst weiters eine Führungsvorrichtung 19. Die Führungsvorrichtung 19 kann balkenartig ausgebildet sein, wobei die Führungsvorrichtung 19 mittels einem Kippgelenk 20 mit dem ersten Einstreu-Auswurfkanal 15 gekoppelt ist. Die Führungsvorrichtung 19 ist weiters mittels einem Führungslager 21 gelagert, wobei die Führungsvorrichtung 19 in Richtung parallel zur Mittelachse 3 beweglich ist und wobei das Führungslager 21 an der Verteilvorrichtung 9 gehalten ist. Die Führungsvorrichtung 19 weist am gegenüberliegenden Ende des Kippgelenks 20 ein Führungselement 22 auf. Die Führungsvorrichtung 19 ist mittels des Führungselements 22 mit dem Ringbahnelement 8 des Ringgehäuses 2 gekoppelt. Insbesondere kann das Führungselement 22 von einer Führungsrolle 23 gebildet sein. Die Führungsrolle 23 kann eine Lauffläche 24 aufweisen, wobei die Lauffläche 24 mit einer Gegenlauffläche 25 des Ringbahnelements 8 in Berührung ist. Wird die Einstreuverteiler-Einrichtung 1 derart ausgerichtet, dass die Mittelachse 3 im Wesentlichen entlang der Schwerkraft ausgerichtet ist und dass der erste Einstreu-Auswurfkanal 15 in Richtung der Mittelachse 3 unterhalt des Einstreu-Einwurfkanals 12 positioniert ist, so bewirkt die Masse des Einstreu-Auswurfkanals 15 und des Führungselements 22, dass die Lauffläche 24 mit der Gegenlauffläche 25 stets in Berührung ist, wenn bei einer Drehung der Verteilvorrichtung 9 das Führungselement 22 entlang des Ringbahnelements 8 des Ringgehäuses 2 geführt wird.

Wird das Führungselement 22 bei einer Drehbewegung der Verteilvorrichtung 9 relativ zum Ringgehäuse 2 in Umfangsrichtung entlang dem Ringbahnelement 8 geführt, so beschreibt das Führungselement 22 bei einer vollen Umdrehung der Verteilvorrichtung 9 eine geschlossene Bahnkurve 26. Das Ringbahnelement 8 kann dabei derart ausgebildet sein, dass die geschlossene Bahnkurve 26 in Umfangsrichtung in einem Teilbereich 27 eine positive Steigung relativ zu einer Normalebene 28 aufweist. Wird das Führungselement 22 durch den Teilbereich 27 am Ringbahnelement 8 geführt, so wird mittels der Führungsvorrichtung 19 ein Winkel 29 zwischen einer Kanal-Mittelachse 30 des ersten Einstreu-Auswurfkanals 15 und der Normalebene 28 verändert. Das Ringbahnelement 8 bzw. die Gegenlauffläche 25 des Ringbahnelements 8 kann in Umfangsrichtung eine oder mehrere Vertiefungen oder Erhebungen relativ zur Normalebene 28 aufweisen, wodurch bei einer Drehbewegung der Verteilvorrichtung 9 relativ zum Ringgehäuse 2 mittels der Führungsvorrichtung 19 der Winkel 29 verändert wird. Durch die Veränderung des Winkels 29 wird bei gleichbleibendem Einstreu-Materialstrom die Auswurfweite des Einstreu verändert, womit eine Stallfläche entsprechend deren geometrischer Ausgestaltung automatisiert und vollflächig mit Einstreu bedeckt werden kann.

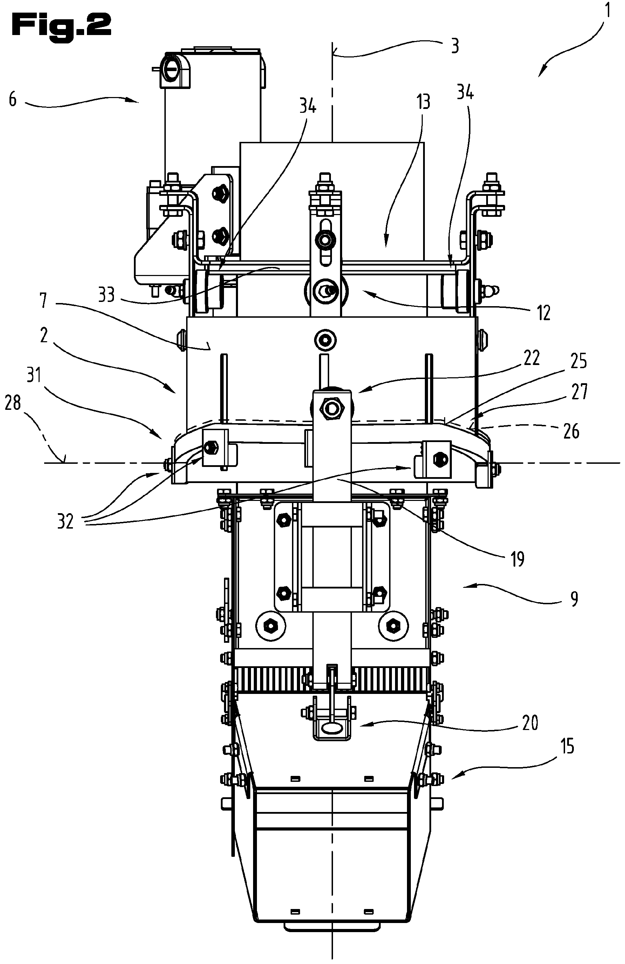

In der Fig. 2 ist eine zweite perspektivische Ansicht der Einstreuverteiler-Einrichtung 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In Fig. 2 ist der Teilbereich 27 mit einer positiven Steigung der Gegenlauffläche 25 des Ringbahnelements 8 bzw. der Bahnkurve 26 relativ zur Normalebene 28 auf Grund der geänderten perspektivischen Ansicht der Einstreuverteiler-Einrichtung 1 erkennbar. Wie unter Zuhilfenahme von Fig. 1 beschrieben, kann die Verteilvorrichtung 9 mittels dem Drehantrieb 6 relativ zum Ringgehäuse 2 verdreht werden. Dabei kann auf Grund der Schwerkraft das Führungselement 22 der Führungsvorrichtung 19 entlang der Bahnkurve 26 bewegt werden, wobei dadurch die Bewegung des Führungselements 22 mittels dem Kippgelenk 20 auf den ersten Einstreu-Auswurfkanal 15 übertragen wird. Dadurch wird der Einstreu-Auswurfkanal 15 in dessen Ausrichtung gegenüber der Normalebene 28 bei einer Drehung der Verteilvorrichtung 9 relativ zum Ringgehäuse 2 verändert. Entsprechend dem Einstreu-Materialstrom ergeben sich somit veränderliche Wurfweiten des Einstreu, wodurch eine Stallfläche entsprechend deren geometrischer Ausgestaltung automatisiert mit Einstreu belegt werden kann.

Das Ringgehäuse 2 kann eine Verstellvorrichtung 31 umfassen. Das Ringbahnelement 8 kann mittels der Verstellvorrichtung 31 in Richtung parallel zur Mittelachse an der Außenumfangsfläche 7 des Ringgehäuses 2 positioniert werden. Die Verstellvorrichtung 31 kann zumindest drei Verstellelemente 32 umfassen, mittels welcher Verstellelemente 32 das Ringbahnelement 8 verstellt werden kann. Es ist denkbar, dass das Ringbahnelement 8 aus einem formbaren Material wie beispielsweise einer Gummimischung ausgebildet ist. Dadurch kann die Möglichkeit geschaffen werden, dass die Bahnkurve 26 veränderbar ist. Die Verstellelemente 32 können von Hydraulikzylindern, Servoantrieben, Pneumatikzylindern, Spindelantrieben oder ähnlichen Linearführungselementen gebildet sein. Für eine ortsfeste Installation der Einstreuverteiler-Einrichtung 1 ist es gleichermaßen denkbar, dass das Ringbahnelement 8 einmalig entsprechend der geometrischen Ausgestaltung einer Stallfläche mit korrespondierender Bahnkurve 26 ausgebildet wird, wobei das Ringbahnelement 8 aus einem im weiteren Betrieb der Einstreuverteiler-Einrichtung 1 unverformbar ist. Dabei kann vorgesehen sein, dass die Verstellelemente 32 Schraubenklemmen sind.

Im Übergangsbereich 13 kann am Einstreu-Einwurfkanal 12 eine radial nach außen vorstehende L-förmige Wandung 33 ausgebildet sein. Die L-förmige Wandung 33 kann im Zusammenwirken mit Führungsrollen 34 bei entsprechender Aufstellung der Einstreuverteiler-Einrichtung 1 mit dessen Mittelachse 3 entlang der Schwerkraft als Lagerung wirken, sodass die Verteilvorrichtung 9 relativ zum Ringgehäuse 2 verdrehbar gelagert ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Einstreuverteiler-Einrichtung | 29 | Winkel |
| 2 | Ringgehäuse | 30 | Kanal-Mittelachse |
| 3 | Mittelachse | 31 | Verstellvorrichtung |
| 4 | Konsole | 32 | Verstellelemente |
| 5 | Einstreu-Bereitstellungseinrichtung | 33 | L-förmige Wandung |
| 6 | Drehantrieb | 34 | Führungsrollen |
| 7 | Außenumfangsfläche | | |
| 8 | Ringbahnelement | | |
| 9 | Verteilvorrichtung | | |
| 10 | Umfangsfläche | | |
| 11 | Drehkranz | | |
| 12 | Einstreu-Einwurfkanal | | |
| 13 | Übergangsbereich | | |
| 14 | Kanalinnendurchmesser | | |
| 15 | erster Einstreu-Auswurfkanal | | |
| 16 | zweiter Einstreu-Auswurfkanal | | |
| 17 | Stellklappe | | |
| 18 | Schwenkachse | | |
| 19 | Führungsvorrichtung | | |
| 20 | Kippgelenk | | |
| 21 | Führungslager | | |
| 22 | Führungselement | | |
| 23 | Führungsrolle | | |
| 24 | Lauffläche der Führungsrolle | | |
| 25 | Gegenlauffläche des Ringbahnelements | | |
| 26 | Bahnkurve | | |
| 27 | Teilbereich | | |
| 28 | Normalebene | | |

## Patentansprüche

1. Einstreuverteiler-Einrichtung (1) zum automatisierten Einstreuen von Stallflächen, umfassend
- ein Ringgehäuse (2) mit einer Mittelachse (3);
- eine Verteilvorrichtung (9) zum Verteilen von Einstreu, wobei die Verteilvorrichtung (9) abschnittsweise im Ringgehäuse (2) angeordnet ist und relativ zum Ringgehäuse (2) um die Mittelachse (3) drehbar am Ringgehäuse (2) gelagert ist, wobei die Verteilvorrichtung (9) einen Drehkranz (11) umfasst, wobei der Drehkranz (11) an der Verteilvorrichtung (9) an einer radial außenliegenden Umfangsfläche (10) ausgebildet ist;
- das Ringgehäuse (2) weiters umfassend ein Ringbahnelement (8) und einen Drehantrieb (6) mit einem Gehäuse,
-- wobei das Ringbahnelement (8) an einer Außenumfangsfläche (7) des Ringgehäuses (2) um das Ringgehäuse (2) umlaufend ausgebildet ist,
-- wobei das Gehäuse des Drehantriebs (6) mit dem Ringgehäuse (2) gekoppelt ist,
-- wobei der Drehantrieb (6) mit dem Drehkranz (11) der Verteilvorrichtung (9) gekoppelt ist, sodass die Verteilvorrichtung (9) mittels des Drehantriebs (6) um die Mittelachse (3) relativ zum Ringgehäuse (2) verdrehbar ist;
- die Verteilvorrichtung (9) weiters umfassend einen Einstreu-Einwurfkanal (12), einen ersten Einstreu-Auswurfkanal (15) und eine Führungsvorrichtung (19),
-- wobei die Führungsvorrichtung (19) an der Verteilvorrichtung (9) mittels eines Führungslagers (21) in Richtung parallel zur Mittelachse (3) beweglich gelagert ist,
-- wobei die Führungsvorrichtung (19) mit dem ersten Einstreu-Auswurfkanal (15) mittels eines Kippgelenks (20) gekoppelt ist,
-- wobei der erste Einstreu-Auswurfkanal (15) bei einer Bewegung der Führungsvorrichtung (19) in Richtung parallel zur Mittelachse (3) um eine, normal zur Mittelachse (3) ausgerichtete Schwenkachse (18) schwenkbar ausgebildet ist,
**dadurch gekennzeichnet, dass**
die Führungsvorrichtung (19) mittels eines Führungselements (22) entlang des Ringbahnelements (8) führbar ist, wobei das Führungselement (22), bei einer Drehbewegung der Verteilvorrichtung (9) relativ zum Ringgehäuse (2), entlang des Ringbahnelements (8) bewegbar ist, wobei eine Bewegung des Führungselements (22) in Richtung parallel zur Mittelachse (3) mittels der Führungsvorrichtung (19) und des Kippgelenks (20) auf den ersten Einstreu-Auswurfkanal (15) übertragbar ist.

2. Einstreuverteiler-Einrichtung (1) nach Anspruch 1, **dadurch gekennzeichnet, dass** das Führungselement (22) als eine Führungsrolle (23) ausgebildet ist, wobei eine Lauffläche (24) der Führungsrolle (23) an einer Gegenlauffläche (25) des Ringbahnelements (8) anliegend ausgebildet ist.

3. Einstreuverteiler-Einrichtung (1) nach einem der vorhergehenden Ansprüche, **dadurch gekennzeichnet, dass** das Ringbahnelement (8) in Umfangsrichtung des Ringgehäuses (2) derart ausgebildet ist, dass das Führungselement (22) bei einer Bewegung entlang des Ringbahnelements (8) einer geschlossenen Bahnkurve (26) folgt, wobei die geschlossene Bahnkurve (26) in Umfangsrichtung des Ringgehäuses (2) einen Teilbereich (27) der Bahnkurve (26) mit einer positiven Steigung relativ zu einer Normalebene (28) der Mittelachse (3) aufweist.

4. Einstreuverteiler-Einrichtung (1) nach einem der vorhergehenden Ansprüche, **dadurch gekennzeichnet, dass** das Ringgehäuse (2) eine Verstellvorrichtung (31) umfasst, wobei das Ringbahnelement (8) mittels der Verstellvorrichtung (31) in Richtung parallel zur Mittelachse (3) an der Außenumfangsfläche (7) des Ringgehäuses (2) positionierbar ist.

5. Einstreuverteiler-Einrichtung (1) nach Anspruch 4, **dadurch gekennzeichnet, dass** die Verstellvorrichtung (31) zumindest drei Verstellelemente (32) umfasst, wobei die Verstellelemente (32) aus einer Gruppe, umfassend einen Hydraulikzylinder, einen Servoantrieb, einen Spindelantrieb, eine Schraubenklemme und einen Pneumatikzylinder ausgewählt sind.

6. Einstreuverteiler-Einrichtung (1) nach einem der vorhergehenden Ansprüche, **dadurch gekennzeichnet, dass** die Verteilvorrichtung (9) einen zweiten Einstreu-Auswurfkanal (16) und eine Stellklappe (17) umfasst, wobei mittels der Stellklappe (17) ein Einstreu-Materialstrom vom Einstreu-Einwurfkanal (12) in einen ersten Auswurf-Materialstrom durch den ersten Einstreu-Auswurfkanal (15) und in einen zweiten Auswurf-Materialstrom durch den zweiten Einstreu-Auswurfkanal (16) teilbar ist.

7. Einstreuverteiler-Einrichtung (1) nach einem der vorhergehenden Ansprüche, **dadurch gekennzeichnet, dass** das Ringgehäuse (2) eine Konsole (4) umfasst, wobei die Einstreuverteiler-Einrichtung (1) mittels der Konsole (4) mit einer Einstreu-Bereitstellungseinrichtung (5) koppelbar ist, wobei die Verteilvorrichtung (9) gegenüber der Einstreu-Bereitstellungseinrichtung (5) um die Mittelachse (3) drehbar gelagert ist.

## Claims

1. A bedding distributor device (1) for the automated bedding of stable surfaces, comprising
- a ring housing (2) with a central axis (3);
- a distributing device (9) for distributing bedding, wherein the distributing device (9) is arranged in sections in the ring housing (2) and is mounted on the ring housing (2) so as to be rotatable relative to the ring housing (2) about the central axis (3), wherein the distributing device (9) comprises a rotating ring (11), wherein the rotating ring (11) is formed on the distributing device (9) on a radially outer circumferential surface (10);
- the ring housing (2) further comprising a ring track element (8) and a rotary drive (6) with a housing,
-- wherein the ring track element (8) is formed on an outer circumferential surface (7) of the ring housing (2) so as to revolve around the ring housing (2),
-- wherein the housing of the rotary drive (6) is coupled to the ring housing (2),
-- wherein the rotary drive (6) is coupled to the rotating ring (11) of the distributing device (9), so that the distributing device (9) can be rotated about the central axis (3) relative to the ring housing (2) by means of the rotary drive (6);
- the distributing device (9) further comprising a bedding feed channel (12), a first bedding discharge channel (15) and a guide device (19),
-- wherein the guide device (19) is mounted on the distributing device (9) so as to be movable in the direction parallel to the central axis (3) by means of a guide bearing (21),
-- wherein the guide device (19) is coupled to the first bedding discharge channel (15) by means of a tilting joint (20),
-- wherein the first bedding discharge channel (15) is configured to be pivotable about a pivot axis (18) aligned perpendicularly to the central axis (3) when the guide device (19) moves in a direction parallel to the central axis (3),
**characterized in that**
the guide device (19) can be guided along the ring track element (8) by means of a guide element (22), wherein the guide element (22) can be moved along the ring track element (8) during a rotary movement of the distributing device (9) relative to the ring housing (2), wherein a movement of the guide element (22) in the direction parallel to the center axis (3) can be transmitted to the first bedding discharge channel (15) by means of the guide device (19) and the tilting joint (20).

2. The bedding distributor device (1) according to claim 1, **characterized in that** the guide element (22) is configured as a guide roller (23), wherein a running surface (24) of the guide roller (23) is formed being in contact with a mating running surface (25) of the ring track element (8).

3. The bedding distributor device (1) according to one of the preceding claims, **characterized in that** the ring track element (8) is configured in the circumferential direction of the ring housing (2) in such a way that the guide element (22) follows a closed path curve (26) during a movement along the ring track element (8), wherein the closed path curve (26) has a partial area (27) of the path curve (26) with a positive gradient relative to a perpendicular plane (28) of the center axis (3) in the circumferential direction of the ring housing (2).

4. The bedding distributor device (1) according to one of the preceding claims, **characterized in that** the ring housing (2) comprises an adjusting device (31), wherein the ring track element (8) can be positioned on the outer circumferential surface (7) of the ring housing (2) by means of the adjusting device (31) in the direction parallel to the central axis (3).

5. The bedding distributor device (1) according to claim 4, **characterized in that** the adjusting device (31) comprises at least three adjusting elements (32), wherein the adjusting elements (32) are selected from a group comprising a hydraulic cylinder, a servo drive, a spindle drive, a screw clamp and a pneumatic cylinder.

6. The bedding distributor device (1) according to one of the preceding claims, **characterized in that** the distributor device (9) comprises a second bedding discharge channel (16) and an adjusting flap (17), wherein by means of the adjusting flap (17) a bedding material flow from the bedding discharge channel (12) can be divided into a first discharge material flow through the first bedding discharge channel (15) and into a second discharge material flow through the second bedding discharge channel (16).

7. The bedding distributor device (1) according to one of the preceding claims, **characterized in that** the ring housing (2) comprises a support element (4), wherein the bedding distributor device (1) can be coupled to a bedding provision device (5) by means of the support element (4), wherein the distributor device (9) is mounted rotatably about the central axis (3) relative to the bedding provision device (5).

## Revendications

1. Dispositif de répartition de litière (1) pour le paillage de surfaces d'étables, comprenant
- un boîtier annulaire (2) avec un axe central (3) ;
- un dispositif de répartition (9) pour la répartition de litière, dans lequel le dispositif de répartition (9) est disposé, à certains endroits, dans le boîtier annulaire (2) et est logé sur le boîtier annulaire (2) de manière rotative autour de l'axe central (3) par rapport au boîtier annulaire (2), dans lequel le dispositif de répartition (9) comprend une couronne rotative (11), dans lequel la couronne rotative (11) sur le dispositif de répartition (9) est réalisée au niveau d'une surface circonférentielle (10) radialement externe ;
- le boîtier annulaire (2) comprend en outre un élément de piste annulaire (8) et un entraînement rotatif (6) avec un boîtier,
- dans lequel l'élément de piste annulaire (8) est réalisé de manière circulaire autour du boîtier annulaire (2) sur une surface circonférentielle externe (7) du boîtier annulaire (2),
- dans lequel le boîtier de l' entraînement rotatif (6) est couplé avec le boîtier annulaire (2),
- dans lequel l'entraînement rotatif (6) est couplé avec la couronne rotative (11) du dispositif de répartition (9), de sorte que le dispositif de répartition (9) peut être mis en rotation par rapport au boîtier annulaire (2) au moyen de l'entraînement rotatif (6) autour de l'axe central (3) ;
- le dispositif de répartition (9) comprend en outre un canal d'introduction de litière (12), un premier canal d'éjection de litière (15) et un dispositif de guidage (19),
- dans lequel le dispositif de guidage (19) est logé de manière mobile sur le dispositif de répartition (9), dans une direction parallèle à l'axe central (3), au moyen d'un palier de guidage (21),
- dans lequel le dispositif de guidage (19) est couplé avec le premier canal d'éjection de litière (15) au moyen d'une articulation basculante (20),
- dans lequel le premier canal d'éjection de litière (15) est conçu de manière pivotante, lors d'un mouvement du dispositif de guidage (19) dans une direction parallèle à l'axe central (3), autour d'un axe de pivotement (18) orienté perpendiculairement à l'axe central (3),
**caractérisé en ce que**
le dispositif de guidage (19) peut être guidé, au moyen d'un élément de guidage (22), le long de l'élément de piste annulaire (8), dans lequel l'élément de guidage (22) peut être déplacé, lors d'un mouvement de rotation du dispositif de répartition (9) par rapport au boîtier annulaire (2), le long de l'élément de piste annulaire (8), dans lequel un mouvement de l'élément de guidage (22) dans une direction parallèle à l'axe central (3) peut être transmis, au moyen du dispositif de guidage (19) et de l'articulation basculante (20), au premier canal d'éjection de litière (15).

2. Dispositif de répartition de litière (1) selon la revendication 1, **caractérisé en ce que** l'élément de guidage (22) est conçu comme un galet de guidage (23), dans lequel une surface de roulement (24) du galet de guidage (23) est conçue de façon à s'appuyer contre une contre-surface de roulement (25) de l'élément de piste annulaire (8).

3. Dispositif de répartition de litière (1) selon l'une des revendications précédentes, **caractérisé en ce que** l'élément de piste annulaire (8) est réalisé dans la direction de la circonférence du boîtier annulaire (2) de sorte que l'élément de guidage (22) suit, lors d'un mouvement le long de l'élément de piste annulaire (8), une trajectoire fermée (26), dans lequel la trajectoire fermée (26) présente, dans la direction de circonférence du boîtier annulaire (2), une partie (27) de la trajectoire (26) avec une pente positive par rapport à un plan normal (28) de l'axe central (3).

4. Dispositif de répartition de litière (1) selon l'une des revendications précédentes, **caractérisé en ce que** le boîtier annulaire (2) comprend un dispositif de réglage (31), dans lequel l'élément de piste annulaire (8) peut être positionné, au moyen du dispositif de réglage (31), dans une direction parallèle à l'axe central (3), sur la surface circonférentielle externe (7) du boîtier annulaire (2).

5. Dispositif de répartition de litière (1) selon la revendication 4, **caractérisé en ce que** le dispositif de réglage (31) comprend au moins trois éléments de réglage (32), dans lequel les éléments de réglage (32) sont sélectionnés dans un groupe constitué d'un vérin hydraulique, d'un servomoteur, d'un entraînement à broche, d'une borne à vis et d'un vérin pneumatique.

6. Dispositif de répartition de litière (1) selon l'une des revendications précédentes, **caractérisé en ce que** le dispositif de répartition (9) comprend un deuxième canal d'éjection de litière (16) et un clapet de réglage (17), dans lequel, grâce au clapet de réglage (17), un flux de matériau de litière provenant du canal d'entrée de litière (12) peut être divisé en un premier flux de matériau de litière s'écoulant à travers le premier canal d'éjection de litière (15) et un deuxième flux de matériau de litière s'écoulant à travers le deuxième canal d'éjection de litière (16).

7. Dispositif de répartition de litière (1) selon l'une des revendications précédentes, **caractérisé en ce que** le boîtier annulaire (2) comprend une console (4), dans lequel le dispositif de répartition de litière (1) peut être couplé, au moyen de la console (4), avec un dispositif de mise à disposition de litière (5), dans lequel le dispositif de répartition (9) est logé de manière rotative autour de l'axe central (3) par rapport au dispositif de mise à disposition de litière (5).
